(19) Europäisches Patentamt / European Patent Office / Office européen des brevets

(11) **EP 4 715 907 A1**

(12) **EUROPEAN PATENT APPLICATION**
published in accordance with Art. 153(4) EPC

(43) Date of publication:
**25.03.2026 Bulletin 2026/13**

(21) Application number: **24908131.6**

(22) Date of filing: **19.12.2024**

(51) International Patent Classification (IPC):
**H01M 4/525** (2010.01)     **H01M 4/505** (2010.01)
**H01M 4/583** (2010.01)     **H01M 10/052** (2010.01)
**H01M 50/107** (2021.01)     **H01M 4/02** (2006.01)

(52) Cooperative Patent Classification (CPC):
**H01M 4/02; H01M 4/36; H01M 4/505; H01M 4/525;
H01M 4/583; H01M 4/587; H01M 10/052;
H01M 10/0525; H01M 50/107; H01M 50/531;
H01M 50/538; Y02E 60/10; Y02P 70/50**

(86) International application number:
**PCT/KR2024/020756**

(87) International publication number:
**WO 2025/135849 (26.06.2025 Gazette 2025/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.12.2023 KR 20230188774**

(71) Applicant: **LG Energy Solution, Ltd.
Seoul 07335 (KR)**

(72) Inventors:
• **PARK, Sung Kwan**
  **Daejeon 34122 (KR)**
• **JANG, Jin Su**
  **Daejeon 34122 (KR)**
• **LEE, Yun Ju**
  **Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **LITHIUM SECONDARY BATTERY**

(57) The present invention relates to a lithium secondary battery that includes an electrode assembly including a positive electrode, a negative electrode, and a separator placed between the positive electrode and the negative electrode, an electrolyte, and a battery case accommodating the electrode assembly and the electrolyte, wherein the positive electrode includes a lithium nickel-based oxide containing 80 mol% or more of nickel among all metals excluding lithium as a positive electrode active material, the lithium nickel-based oxide includes single particle type particles, secondary particles, or a combination thereof, the negative electrode includes at least one selected from the group consisting of natural graphite and artificial graphite, as a negative electrode active material, and a TS index (unit: $g/m^2$) defined by Equation 1 below is 1.72 or less.

[Equation 1]

$$TS = \frac{P_S \times N_G}{S_N \times E}$$

The variables in Equation 1 above are the same as those described above in the specification.

EP 4 715 907 A1

[FIG. 5]

**Description**

## TECHNICAL FIELD

### Cross-reference to Related Applications

This application claims the benefit of Korean Patent Application No. 10-2023-0188774, filed on December 21, 2023, in the Korean Intellectual Property Office, the disclosure of which is incorporated herein in its entirety by reference.

### Technical Field

The present invention relates to a lithium secondary battery, and more particularly, to a lithium secondary battery exhibiting excellent thermal safety.

## BACKGROUND ART

Lithium secondary batteries, providing high energy density and excellent performance, are widely used in various applications such as portable electronic devices, electric vehicles, and energy storage devices. Accordingly, for the lithium secondary batteries, high energy density and thermal safety have become important considerations.

Specifically, the lithium secondary batteries may undergo a rapid rise in internal temperature due to various factors such as overcharging, over-discharging, external impact, or internal short circuits, and this temperature increase may accelerate chemical reactions inside the batteries, causing thermal runaway. The thermal runaway may lead to ignition or explosion of batteries due to a chain of exothermic reactions occurring inside the batteries, which may pose a serious threat to user safety.

In addition, lithium secondary batteries with insufficient thermal stability may reduce the lifespan and performance of batteries and significantly reduce product reliability. In particular, in applications where high-capacity batteries are used, such as electric vehicles, the importance of thermal safety issues is further highlighted.

Therefore, there is a need for the development of technologies that may improve the thermal safety of lithium secondary batteries.

## DISCLOSURE OF THE INVENTION

### TECHNICAL PROBLEM

The present invention is designed to overcome the limitations described above, and thus an aspect of the present invention provides a lithium secondary battery exhibiting excellent thermal safety.

### TECHNICAL SOLUTION

[1] According to an aspect of the present invention, there is provided a lithium secondary battery that includes an electrode assembly including a positive electrode, a negative electrode, and a separator placed between the positive electrode and the negative electrode, an electrolyte, and a battery case accommodating the electrode assembly and the electrolyte, wherein the positive electrode includes a lithium nickel-based oxide containing 80 mol% or more of nickel among all metals excluding lithium as a positive electrode active material, the lithium nickel-based oxide includes single particle type particles, secondary particles, or a combination thereof, the negative electrode includes at least one selected from the group consisting of natural graphite and artificial graphite, as a negative electrode active material, and a TS index (unit: g/m$^2$) defined by Equation 1 below is 1.72 or less.

$$[Equation\ 1]$$

$$TS = \frac{P_S \times N_G}{S_N \times E}$$

In Equation 1 above, $P_S$ indicates a ratio of a weight of lithium nickel-based oxide in the form of secondary particles to a total weight of the lithium nickel-based oxide, $N_G$ indicates a ratio of a weight of the natural graphite to a total weight of the natural graphite and artificial graphite, $S_N$ indicates a BET specific surface area (unit: $m^2/g$) of the negative electrode active material, and E indicates a ratio of a total weight of the electrolyte to a total weight of the lithium secondary battery.

[2] The present invention provides the lithium secondary battery according to [1] above, wherein the $P_S$ is 0.7 or less.

[3] The present invention provides the lithium secondary battery according to [1] or [2] above, wherein the $N_G$ is 0.6 or less.

[4] The present invention provides the lithium secondary battery according to at least one of [1] to [3] above, wherein the $S_N$ ranges from 1.3 $m^2/g$ to 1.9 $m^2/g$.

[5] The present invention provides the lithium secondary battery according to at least one of [1] to [4] above, wherein the E ranges from 0.08 to 0.13.

[6] The present invention provides the lithium secondary battery according to at least one of [1] to [5] above, wherein the lithium nickel-based oxide is represented by Formula 1 below.

$$[\text{Formula 1}] \qquad Li_{a1}[Ni_{x1}Co_{y1}Mn_{z1}M^1_{w1}]O_2$$

In Formula 1 above, $M^1$ is at least one doping element selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo, and $0.8 \leq a1 \leq 1.2$, $0.8 \leq x1 < 1$, $0 < y1 \leq 0.2$, $0 < z1 \leq 0.2$, and $0 \leq w1 \leq 0.1$.

[7] The present invention provides the lithium secondary battery according to at least one of [1] to [6] above, wherein the battery case is a cylindrical battery case.

[8] The present invention provides the lithium secondary battery according to at least one of [1] to [7] above, wherein the lithium secondary battery has a ratio (R/H) of diameter (R) to height (H) of 0.4 or more.

[9] The present invention provides the lithium secondary battery according to at least one of [1] to [8] above, wherein the lithium secondary battery is a 46110 cell, a 48110 cell, a 4880 cell, or a 4680 cell.

[10] The present invention provides the lithium secondary battery according to at least one of [1] to [9] above, wherein the lithium secondary battery includes a non-coating portion in which an active material layer is not formed on at least a portion of the positive electrode and the negative electrode, wherein the positive electrode non-coating portion and the negative electrode non-coating portion are defined as electrode tabs.

[11] The present invention provides the lithium secondary battery according to [10] above, wherein the positive electrode non-coating portion and the negative electrode non-coating portion are formed at an end of one side of each of the positive electrode and the negative electrode along a direction in which the electrode assembly is wound, a current collecting plate is coupled to each of the positive electrode non-coating portion and the negative electrode non-coating portion, and the current collecting plate is connected to an electrode terminal.

[12] The present invention provides the lithium secondary battery according to [10] or [11] above, wherein the positive electrode non-coating portion and the negative electrode non-coating portion are processed in a form of a plurality of segments that are independently bendable, and at least a portion of the plurality of segments are bent toward a winding center of the electrode assembly.

[13] The present invention provides the lithium secondary battery according to [12] above, wherein at least a portion of the plurality of bent segments are overlapped on an upper end and a lower end of the electrode assembly, and the current collecting plate is coupled to the plurality of overlapped segments.

[14] According to another aspect of the present invention, there is provided a battery pack including the lithium secondary battery of one of [1] to [13] above as a unit cell.

## ADVANTAGEOUS EFFECTS

A lithium secondary battery according to the present invention includes a lithium nickel-based oxide containing a high content of lithium among metals excluding lithium in a positive electrode active material, thereby achieving high-capacity characteristics, and adjusts a weight ratio of lithium nickel-based oxide in the form of secondary particles in the lithium nickel-based oxide, a weight ratio of natural graphite in a negative electrode active material, a BET specific surface area of the negative electrode active material, and a weight ratio of an electrolyte to satisfy specific relationships, thereby allowing heat inside the battery to be quickly discharged to the outside of the battery, resulting in improved thermal safety.

## BRIEF DESCRIPTION OF THE DRAWINGS

FIG. 1 is a view showing a stacking state before an electrode assembly according to the present invention is wound;

FIG. 2 is a cross-sectional view showing a structure of an electrode of an electrode assembly according to an embodiment of the present invention;

FIG. 3 is a view for describing a structure of an electrode assembly according to an embodiment of the present invention;

FIG. 4 is a cross-sectional view showing a structure of a lithium secondary battery according to an embodiment of the present invention;

FIG. 5 is a cross-sectional view showing a structure of a lithium secondary battery according to another embodiment of the present invention; and

FIG. 6 is a view for describing a battery pack according to the present invention.

## MODE FOR CARRYING OUT THE INVENTION

Hereinafter, the present invention will be described in detail.

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. The singular expressions "a", "an" and "the" are intended to include the plural forms as well, unless the context clearly indicates otherwise.

It will be further understood that the term "include", "comprise", or "have" used herein, specifies the presence of stated features, numbers, steps, elements, or combinations thereof, but does not preclude the presence or addition of one or more other features, numbers, steps, elements, or combinations thereof.

As used herein, the term "single particle type" indicates a particle formed by an assembly of 30 or fewer sub-particles. The sub-particle unit constituting a single particle type particle is defined as a nodule. Single particle type particles include single particles composed of one nodule and quasi-single particles that are composites of 2 to 30 nodules.

The term "nodule" indicates a lower particle unit body constituting a single particle and a quasi-single particle, and may be a single crystal lacking crystalline grain boundaries or may be a polycrystal in which grain boundaries are not present when observed in a field of view of $5000\times$ to $20000\times$ using a scanning electron microscope.

As used herein, the term "secondary particle" indicates a particle formed by an assembly of more than 30 sub-particles. To distinguish the term from a sub-particle forming a single particle, the sub-particle forming a secondary particle is referred to as a "primary particle".

As used herein, when "particle" is described, any one or all of a single particle, a quasi-single particle, a primary particle, a nodule, and a secondary particle may be encompassed.

As used herein, a "specific surface area" is measured through a BET method, and specifically may be calculated from an amount of nitrogen gas adsorbed at a liquid nitrogen temperature (77 K) using BELSORP-mino II from BEL JAPAN, INC.

With recent advances in electric vehicle technology, the demand for high-capacity batteries is increasing. To develop batteries with such high-capacity characteristics, large cylindrical batteries with increased volume are being developed compared to typical small cylindrical batteries. However, in the case of large cylindrical batteries, as the size of the batteries increases, the amount of heat and gas generated inside the batteries also increases, which may cause ignition or explosion of the batteries.

Meanwhile, to increase the capacity of batteries, there is a growing trend to apply high-nickel (high-Ni) lithium transition metal oxides, in which the nickel content is increased from typical nickel-cobalt-manganese-based lithium transition metal oxides, as a positive electrode active material in lithium secondary batteries. However, in the case of high-nickel lithium transition metal oxides, as the nickel content increases, the amount of residual lithium increases, which causes side reactions with an electrolyte during charging and discharging, generating gas, and consequently, thermal safety is degraded due to the occurrence of explosion and/or ignition of batteries.

Therefore, through repeated research to develop a lithium secondary battery with excellent capacity characteristics and excellent thermal safety, the present inventors have discovered that improving capacity characteristics and thermal safety of batteries is achievable by adjusting a ratio of secondary particles in lithium nickel-based oxide included in a positive electrode active material, a ratio of natural graphite in a negative electrode active material, and a weight ratio of an electrolyte to a battery weight according to materials of positive and negative electrodes, indicated by a BET specific surface area of the negative electrode active material to satisfy a specific relational expression, thereby completing the present invention.

Hereinafter, the present invention will be described in detail.

**Lithium Secondary Battery**

A lithium secondary battery according to the present invention includes an electrode assembly including a positive electrode, a negative electrode, and a separator placed between the positive electrode and the negative electrode, an electrolyte, and a battery case accommodating the electrode assembly and the electrolyte, wherein the positive electrode includes a lithium nickel-based oxide containing 80 mol% or more of nickel among all metals excluding lithium as a positive electrode active material, the lithium nickel-based oxide includes single particle type particles, secondary particles, or a combination thereof, the negative electrode includes at least one selected from the group consisting of natural graphite and artificial graphite, as a negative electrode active material, and a TS index (unit: $g/m^2$) defined by Equation 1 below is 1.72 or less.

[Equation 1]

$$TS = \frac{P_S \times N_G}{S_N \times E}$$

In Equation 1 above, $P_S$ indicates a ratio of a weight of the lithium nickel-based oxide in the form of secondary particles to a total weight of the lithium nickel-based oxide, $N_G$ indicates a ratio of a weight of the natural graphite to a total weight of the natural graphite and artificial graphite, $S_N$ indicates a BET specific surface area (unit: $m^2/g$) of the negative electrode active material, and E indicates a ratio of a weight of the electrolyte to a total weight of the lithium secondary battery.

Specifically, the TS index defined by Equation 1 above corresponds to a parameter that defines the relationship among the ratio of the weight of the lithium nickel-based oxide in the form of secondary particles to the total weight of the lithium nickel-based oxide, the ratio of the weight of the natural graphite to the total weight of the natural graphite and artificial graphite, the BET specific surface area of the negative electrode active material, and the ratio of the weight of the electrolyte to the total weight of the lithium secondary battery, in order to improve thermal safety of the lithium secondary battery.

When the ratio of the weight of the lithium nickel-based oxide in the form of secondary particles to the total weight of the lithium nickel-based oxide, the ratio of the weight of the natural graphite to the total weight of the natural graphite and artificial graphite, the BET specific surface area of the negative electrode active material, and the ratio of the weight of the electrolyte to the total weight of the lithium secondary battery are each independently excessively high or low, the thermal safety of the lithium secondary battery may not be sufficiently improved. Accordingly, it is needed to devise a relational expression that may improve thermal safety by enabling the ratio of the weight of the lithium nickel-based oxide in the form of secondary particles to the total weight of the lithium nickel-based oxide, the ratio of the weight of the natural graphite to the total weight of the natural graphite and artificial graphite, the BET specific surface area of the negative electrode active material, and the ratio of the weight of the electrolyte to the total weight of the lithium secondary battery to complement for each other even when they are each excessively high or low.

Consequently, the present invention may improve the thermal safety of the lithium secondary battery by indicating the relationship among the ratio of the weight of the lithium nickel-based oxide in the form of secondary particles to the total weight of the lithium nickel-based oxide, the ratio of the weight of the natural graphite to the total weight of the natural graphite and artificial graphite, the BET specific surface area of the negative electrode active material, and the ratio of the weight of the electrolyte to the total weight of the lithium secondary battery, as a TS index defined by Equation 1, and by mutually adjusting values of the components such that the TS index is 1.72 or less.

The TS index may be 1.72 or less, preferably 1.60 or less, and more preferably 1.50 or less. When the above range is satisfied, by appropriately adjusting the weight ratio of secondary particles in the lithium nickel-based oxide included in the positive electrode active material, the ratio of natural graphite in the negative electrode active material, and the ratio of the weight of the electrolyte to the total weight of the lithium secondary battery depending on the materials of the positive and negative electrodes, indicated by the BET specific surface area of the negative electrode active material, it is possible to improve capacity characteristics while reducing the rate of exothermic reactions occurring in the positive electrode, negative electrode, and electrolyte within the battery at high temperatures. Accordingly, the amount of gas generated from high-temperature exposure time is reduced, and thus, the temperature rise caused by thermal decomposition reactions may be suppressed, thereby preventing explosion and ignition of the battery due to the high temperature gas, resulting in improved thermal safety of the battery.

The $P_S$ indicates a ratio of a weight of lithium nickel-based oxide in the form of secondary particles to a total weight of the lithium nickel-based oxide. A cross-section of a positive electrode perpendicular to the positive electrode surface may be observed using a scanning electron microscope (SEM) to distinguish between secondary particles and single particle type particles from the particle shape of the secondary particles and single particle type particles, and then a volume ratio of the secondary particles and single particle type particles may be measured therefrom, and a weight ratio of lithium nickel-based oxide in the form of secondary particles to a total weight of the secondary particles and the single particle type particles may be calculated by multiplying the respective densities of the secondary particles and the single particle type particles to measure the $P_S$. The $P_S$ may be 0.7 or less, preferably 0.6 or less, and more preferably 0.5 or less. When the above range is satisfied, excellent thermal safety, output characteristics, and long-term life characteristics, and improved processability may be achieved.

The $N_G$ indicates a ratio of a weight of the natural graphite to a total weight of the natural graphite and artificial graphite. A cross-section of a negative electrode perpendicular to the negative electrode surface may be observed using a scanning electron microscope (SEM) to distinguish between artificial graphite and natural graphite from the particle shape of the artificial graphite and natural graphite, and then a volume ratio of the artificial graphite and natural graphite may be measured therefrom, and a ratio of a weight of the natural graphite to a total weight of the natural graphite and the artificial graphite may be calculated by multiplying the respective densities of the artificial graphite and the natural graphite to measure the $N_G$. The $N_G$ may be 0.6 or less, preferably 0.1 to 0.6, and more preferably 0.2 to 0.5. When the above range is satisfied, the battery may have excellent quick charging characteristics, improved thermal safety, and enhanced adhesion, resulting in improved long-term life characteristics.

The $S_N$ indicates a BET specific surface area (unit: $m^2/g$) of the negative electrode active material. A negative electrode containing the negative electrode active material may be scraped into a powder form, and then a nitrogen gas adsorption amount of the powder at liquid nitrogen temperature (77 K) may be measured using BELSORP-mino II of BEL Japan to obtain the $S_N$, a BET specific surface area (unit: $m^2/g$) of the negative electrode active material. The $S_N$ may be 1.3 $m^2/g$ to 1.9 $m^2/g$, preferably 1.4 $m^2/g$ to 1.8 $m^2/g$, and more preferably 1.5 $m^2/g$ to 1.7 $m^2/g$. When the above range is satisfied, the specific surface area of a negative electrode material is optimized in the process of chain side reactions occurring in a high-temperature environment, and thus heat generation and high-temperature gas generation may be minimized.

The E indicates a ratio of a weight of the electrolyte to a total weight of the lithium secondary battery. In this case, the weight of the electrolyte may be a weight of the electrolyte remaining in the lithium secondary battery after performing an activation process, and the total weight of the lithium secondary battery may be a total weight of the lithium secondary battery after performing an activation process, but the embodiment of the present invention is not limited thereto.

The activation indicates a process of charging and/or discharging a lithium secondary battery manufactured but not yet charged or discharged to provide electrical characteristics, and forming a solid electrolyte interphase (SEI) film on an electrode to stabilize batteries, thereby making the batteries ready for actual use.

With respect to the E, the activation may be achieved by performing the process of charging the lithium secondary battery up to a voltage of 4.2 V or higher and discharging the lithium secondary battery up to a voltage of 2.5 V or lower at 70 °C at least three times, but the embodiment of the present invention is not limited thereto.

Specifically, the weight of the electrolyte may indicate a sum of the weight of the electrolyte impregnated in the internal pores of the electrode assembly and the weight of the electrolyte located outside the electrode assembly in the internal space of the battery case.

For example, a weight of the electrolyte may be measured by (1) measuring a weight ($M_L$) of a lithium secondary battery after activation, which includes an electrode assembly, an electrolyte, and a battery case, where the battery case is sealed, (2) disassembling the lithium secondary battery to remove the electrolyte present in the battery case, (3) immersing the battery case and the electrode assembly in a dimethyl carbonate solvent to remove the electrolyte present on a surface of the battery case, a surface of the electrode assembly, and internal pores, and then drying the battery case and the electrode assembly, and (4) measuring a weight ($M_C$) of the dried battery case and a weight ($M_A$) of the dried electrode assembly, and then substituting the measured $M_L$, $M_C$, and $M_A$ into Equation A below.

$$[\text{Equation A}]$$

$$\text{Weight of electrolyte above} = M_L - M_C - M_A$$

The E may be 0.08 to 0.13, preferably 0.09 to 0.12, and more preferably 0.095 to 0.11. When the above range is satisfied, an empty space inside the battery is reduced, and thus, when the amount of gas generated inside the battery reaches a certain level, the opening time of the vent portion may be reduced, thereby improving the thermal safety of the lithium secondary battery.

Hereinafter, each component of the lithium secondary battery according to the present invention will be described in detail.

The lithium secondary battery according to the present invention includes an electrode assembly including a positive electrode, a negative electrode, and a separator placed between the positive electrode and the negative electrode; an electrolyte; and a battery case accommodating the electrode assembly and the electrolyte.

**(1) Electrode assembly**

The electrode assembly according to the present invention includes a positive electrode, a negative electrode, and a separator placed between the positive electrode and the negative electrode.

The electrode assembly may be various forms of electrode assemblies well known in the art, for example, a jelly-roll type, a stack type, a stack and lamination type, or a stack and folding type electrode assembly, and the form thereof is not particularly limited.

Preferably, the electrode assembly may be a jelly-roll type electrode assembly.

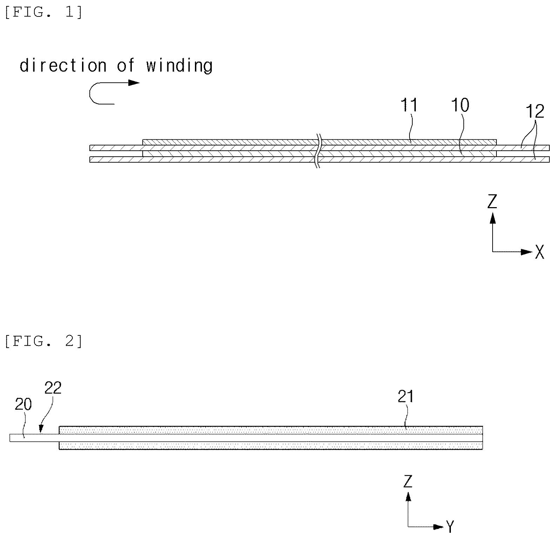

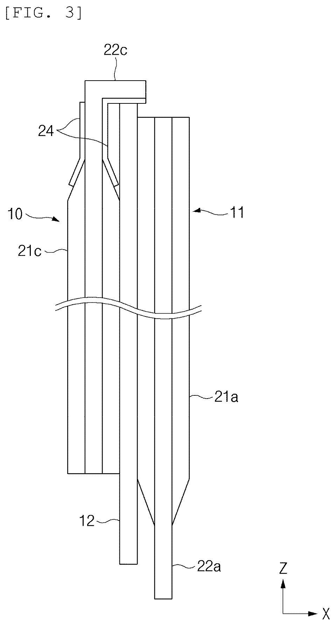

FIG. 1 illustrates a stacking structure before the electrode assembly according to the present invention is wound, FIG. 2 illustrates a cross-sectional structure of an electrode plate (a positive electrode or a negative electrode) according to an embodiment of the present invention, and FIG. 3 illustrates a structure of an electrode assembly according to an embodiment of the present invention.

Referring to FIGS. 1 and 2, when the electrode assembly is a jelly-roll type electrode assembly, an electrode assembly A of the present invention may be prepared by winding a stack in one direction X, and the stack is formed by sequentially stacking a separator 12, a positive electrode 10, a separator 12, and a negative electrode 11 at least one time.

Hereinafter, each of components of the electrode assembly of the present invention will be described in detail.

**1) Positive electrode**

The positive electrode may be prepared by applying a positive electrode slurry onto one side or both sides of a sheet-shaped positive electrode current collector, removing a solvent of the positive electrode slurry through a drying process, and then rolling. Meanwhile, a positive electrode including a non-coating portion may be prepared by not applying a positive electrode slurry onto a portion of a positive electrode current collector, for example, one end of the positive electrode current collector, when applying the positive electrode slurry.

In addition, the positive electrode slurry may be prepared by dispersing a positive electrode material according to the present invention in a solvent such as dimethyl sulfoxide (DMSO), isopropyl alcohol, N-methylpyrrolidone (NMP), acetone, or water.

The positive electrode prepared thereby may include a positive electrode active material, and specifically, the positive electrode may include a positive electrode current collector, and a positive electrode active material layer, and the positive electrode active material layer may include a positive electrode active material.

As the positive electrode current collector, various positive electrode current collectors known in the art may be used. For example, stainless steel, aluminum, nickel, titanium, fired carbon, or aluminum or stainless steel that is surface-treated with one of carbon, nickel, titanium, silver, or the like may be used as the positive electrode current collector. The positive electrode current collector may typically have a thickness of 3 to 500 $\mu$m, 5 to 300 $\mu$m, or 7 to 200 $\mu$m, and fine irregularities may be formed on a surface of the positive electrode current collector to enhance adhesion of the positive electrode active material. For example, the positive electrode current collector may be used in various forms such as a film, a sheet, a foil, a net, a porous body, a foam body, and a non-woven fabric body.

The positive electrode active material layer may be placed on the positive electrode current collector, and may specifically be placed on one surface or both surfaces of the positive electrode current collector. The positive electrode active material layer may have a single-layer structure or a multi-layer structure of two or more layers.

The positive electrode active material layer includes a lithium nickel-based oxide containing 80 mol% or more, 85 mol% or more, 88 mol% or more, 90 mol% or more, or 92 mol% or more of nickel among all metals excluding lithium as a positive electrode active material. When the lithium nickel-based oxide is included, a lithium secondary battery manufactured with a high content of nickel may exhibit excellent capacity.

The lithium nickel-based oxide may be represented by Formula 1 below.

$$[Formula\ 1] \qquad Li_{a1}[Ni_{x1}Co_{y1}Mn_{z1}M^1_{w1}]O_2$$

In Formula 1 above, $M^1$ may be at least one doping element selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo, or may be at least one doping element selected from the group consisting of W, Y, Ba, Ca, Ti, Mg, Ta, and Nb. When the $M^1$ is included, the lithium nickel-based oxide may have improved structural stability.

In addition, in Formula 1 above, the following conditions may be satisfied: $0.8 \leq a1 \leq 1.2$, $0.8 \leq x1 < 1$, $0 < y1 \leq 0.2$, $0 < z1 \leq 0.2$, and $0 \leq w1 \leq 0.1$.

Specifically, the a1 may indicate a molar ratio of lithium (Li) in the lithium nickel-based oxide represented by Formula 1 above, and may meet the following conditions: $0.8 \leq a1 \leq 1.2$, $0.9 \leq a1 \leq 1.15$, or $1.0 \leq a1 \leq 1.1$. When the above range is satisfied, a balance may be achieved between significant improvement in capacity characteristics of the positive electrode active material due to Li content control and sintering properties during the manufacture of the positive electrode active material.

The x1 may indicate a molar ratio of nickel in the lithium nickel-based oxide represented by Formula 1 above, and may meet the following conditions: $0.80 \leq x1 < 1$, $0.88 \leq x1 < 1$, $0.90 \leq x1 < 1$, or $0.92 \leq x1 < 1$. When the above range is satisfied, a sufficient nickel content is secured within the lithium nickel-based oxide to contribute to charging and discharging, thereby enabling high capacity.

The y1 may indicate a molar ratio of cobalt in the lithium nickel-based oxide represented by Formula 1 above, and may meet the following conditions: $0 < y1 \leq 0.2$, $0 < y1 \leq 0.18$, or $0.01 \leq y1 \leq 0.15$. When the above range is satisfied, the lithium transition metal oxide contains a small amount of cobalt, and accordingly, cost savings as well as satisfactory resistance characteristics and output characteristics may be achieved.

The z1 may indicate a molar ratio of manganese in the lithium nickel-based oxide represented by Formula 1 above, and may meet the following conditions: $0 < z1 \leq 0.2$, $0 < z1 \leq 0.18$, or $0.01 \leq z1 \leq 0.15$. When the above range is satisfied, the lithium nickel-based oxide may have improved structural stability.

The w1 may indicate a molar ratio of $M^1$ in the lithium nickel-based oxide represented by Formula 1 above, and may meet the following conditions: $0 \leq w1 \leq 0.1$, $0 \leq w1 \leq 0.08$, or $0 \leq w1 \leq 0.05$. When the above range is satisfied, the lithium nickel-based oxide may have improved structural stability and energy density.

The lithium nickel-based oxide may include single particle type particles, secondary particles, or a combination thereof.

When the lithium nickel-based oxide contains single particle type particles, particle breakage is reduced during rolling and side reactions with an electrolyte is reduced, and thus the amount of gas generated at high temperatures is reduced, which reduces the risk of breakage of a separator, electrolyte leakage, and explosion of the battery at high temperatures, thereby improving thermal safety of the battery and achieving excellent storage characteristics due to reduced self-discharge.

However, when the lithium nickel-based oxide contains only single-particle type particles, there may be difficulties in the manufacturing process of a lithium secondary battery due to the generation of nip pressure, the specific surface area is small, resulting in reduced electrolyte impregnation properties, and a lithium migration path extends, resulting in reduced mobility of lithium ions, and accordingly, resistance characteristics, output characteristics, and long-term lifespan are reduced.

Therefore, the lithium secondary battery according to the present invention includes single particle type particles, secondary particles, or a combination thereof in the lithium nickel-based oxide, and adjusts $N_G$, $S_N$, and E values constituting a TS index such that the TS index defined by Equation 1 above is 1.72 or less, depending on the weight ratio of the lithium nickel-based oxide in the form of secondary particles included in the lithium nickel-based oxide, and may thus exhibit excellent thermal safety and lifespan characteristics while improving resistance characteristics, output characteristics, and processability.

Meanwhile, the secondary particle type lithium nickel-based oxide in the positive electrode active material may have an average particle diameter ($D_{50}$) of 11 $\mu$m to 20 $\mu$m, preferably 12 $\mu$m to 15 $\mu$m, and more preferably 13 $\mu$m to 14 $\mu$m. The single particle type lithium nickel-based oxide in the positive electrode active material may have an average particle diameter ($D_{50}$) of 3 $\mu$m to 6 $\mu$m, preferably 3.5 $\mu$m to 5.5 $\mu$m, and more preferably 4 $\mu$m to 5 $\mu$m. When the above range is satisfied, side reactions with an electrolyte may be minimized while an increase in resistance and degradation in output characteristics are prevented, and thus batteries may have improved safety and life characteristics.

The positive electrode active material layer may include the positive electrode active material in an amount of 80 wt% to 99.9 wt%, preferably 90 wt% to 99.9 wt%, and more preferably 95 wt% to 99.9 wt%.

Meanwhile, the positive electrode active material layer may further include at least one of a positive electrode conductive material or a positive electrode binder optionally.

The positive electrode conductive material is used to impart conductivity to an electrode, and any positive electrode conductive material may be used without particular limitation as long as it has electron conductivity without causing chemical changes in batteries to be constituted. Specific examples thereof may include graphite such as natural graphite or artificial graphite; a carbon-based material such as carbon black, acetylene black, Ketjen black, channel black, furnace black, lamp black, thermal black, carbon fibers, and carbon nanotubes; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The positive electrode conductive material may typically be included in an amount of 0.1 wt% to 30 wt%, preferably 0.3 wt% to 20 wt%, more preferably 0.5 wt% to 10 wt%, and more preferably 0.7 wt% to 5 wt%, with respect to the total weight of the positive electrode active material layer.

The positive electrode binder serves to improve the bonding between positive electrode material particles and the adhesion between a positive electrode material and a positive electrode current collector, and specific examples of the positive electrode binder may be fluorine resin-based binders including polyvinylidene fluoride (PVDF) or polytetrafluoroethylene (PTFE); rubber-based binders including styrene butadiene rubber (SBR), acrylonitrile-butadiene rubber, and styrene-isoprene rubber; cellulose-based binders including carboxyl methyl cellulose (CMC), starch, hydroxy propyl cellulose, and regenerated cellulose; polyalcohol-based binders including polyvinyl alcohol; polyolefin-based binders including polyethylene and polypropylene; polyimide-based binders; polyester-based binders; and silane-based binders, and any one thereof or a mixture of two or more thereof may be used. The positive electrode binder may be included in an amount of 0.1 wt% to 30 wt%, preferably 0.3 wt% to 20 wt%, more preferably 0.5 wt% to 10 wt%, and more preferably 0.7 wt% to 5 wt%, with respect to the total weight of the positive electrode active material layer.

## 2) Negative electrode

The negative electrode may be prepared by applying a negative electrode slurry onto one side or both sides of a long sheet-shaped negative electrode current collector, removing a solvent of the negative electrode slurry through a drying process, and then rolling. Meanwhile, a negative electrode including a non-coating portion may be prepared by not applying a negative electrode slurry onto a portion of a negative electrode current collector, for example, one end of the negative electrode current collector, when applying the negative electrode slurry.

The negative electrode slurry may be prepared by dispersing a negative electrode active material, in a solvent such as distilled water, ethanol, methanol, or isopropyl alcohol.

Alternatively, the negative electrode may be prepared by casting a separate support with the negative electrode slurry and then laminating the negative electrode current collector with a film separated from the support.

The negative electrode may include a negative electrode active material, and specifically, may include the negative electrode current collector and a negative electrode active material layer, and the negative electrode active material layer may include a negative electrode active material.

The negative electrode current collector is not particularly limited as long as it has a high conductivity without causing a chemical change in a battery. For example, copper, stainless steel, aluminum, nickel, titanium, baked carbon, copper or stainless steel that is surface-treated with one of carbon, nickel, titanium, silver, and the like, an aluminum-cadmium alloy, and the like may be used. The negative electrode current collector may typically have a thickness of 3 to 500 $\mu$m, 5 to 300 $\mu$m, or 7 to 200 $\mu$m.

In addition, the negative electrode current collector, like the positive electrode current collector, may have fine irregularities formed on a surface thereof to improve bonding strength of a negative electrode active material. For example, the current collector may be used in various forms such as a film, a sheet, a foil, a net, a porous body, a foam body, and a non-woven fabric body.

The negative electrode active material layer may be placed on the negative electrode current collector, and may specifically be placed on one surface or both surfaces of the negative electrode current collector. The negative electrode active material layer may have a single-layer structure or a multi-layer structure of two or more layers.

The negative electrode active material layer includes at least one selected from the group consisting of natural graphite and artificial graphite, as a negative electrode active material. By controlling the material of the negative electrode active material such that the TS index represented by Formula 1 above is 1.72 or less, the manufactured lithium secondary battery may provide cost benefits while exhibiting excellent capacity characteristics, life characteristics, and thermal safety.

The negative electrode active material layer may include the negative electrode active material in an amount of 80 wt% to 99.9 wt%, preferably 90 wt% to 99.5 wt%, more preferably 95 wt% to 99.9 wt%, and even more preferably 97 wt% to 99.9 wt%.

Meanwhile, the negative electrode active material layer may further include a negative electrode conductive material and a negative electrode binder optionally, in addition to the negative electrode active material.

The negative electrode conductive material is used to impart conductivity to an electrode, and any negative electrode conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, carbon fibers, and carbon nanotubes; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The negative electrode conductive material may typically be included in an amount of 0.1 wt% to 30 wt%, preferably 0.3 wt% to 20 wt%, more preferably 0.5 wt% to 10 wt%, and more preferably 0.7 wt% to 5 wt%, with respect to the total weight of the negative electrode active material layer.

The negative electrode binder serves to improve the bonding between negative electrode active material particles and the adhesion between the negative electrode active material and the negative electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber(EPDM rubber), a sulfonated EPDM, styrene-butadiene rubber (SBR), fluorine rubber, or various copolymers thereof, and any one thereof or a mixture of two or more thereof may be used. The negative electrode binder may be included in an amount of 0.1 wt% to 30 wt%, preferably 0.3 wt% to 20 wt%, more preferably 0.5 wt% to 10 wt%, and more preferably 0.7 wt% to 5 wt%, with respect to the total weight of the negative electrode active material layer.

**3) Separator**

Next, the separator is placed between the negative electrode and the positive electrode, and thus serves to separate the negative electrode and the positive electrode and provide a passage for lithium ion migration, and any separator commonly used in lithium secondary batteries may be used without particular limitation. Specifically, as the separator, a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a stack structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength.

Meanwhile, the positive electrode 10 and the negative electrode 11 have a structure in which an active material layer 21 is formed on a current collector 20 having a sheet shape, and a partial region of the current collector 20 may have a non-coating portion 22 in which the active material layer 21 is not formed.

As described above, when the positive electrode 10 and the negative electrode 11 including the non-coating portion 22 are used, it is possible to obtain a battery having a structure with no separate electrode tab and with at least a portion of the non-coating portions of the positive electrode 10 and the negative electrode 11 defining electrode tabs.

Specifically, the non-coating portion 22 may be formed at an end of one side of the current collector 20 and elongated along a winding direction X. A current collecting plate is coupled to each of the positive electrode non-coating portion and the negative electrode non-coating portion, and the current collecting plate is connected to an electrode terminal, allowing the non-coating portion 22 to serve as an electrode tab.

For example, a battery in which a positive electrode non-coating portion and a negative electrode non-coating portion serve as electrode tabs may be manufactured through the following method. First, a separator, a positive electrode, a separator, and a negative electrode are sequentially stacked such that a positive electrode non-coating portion and a negative electrode non-coating portion are positioned in opposite directions, and then wound in one direction to prepare an electrode assembly. Next, the non-coating portions of the positive electrode and the negative electrode are bent in a direction toward a winding center C, and then, a current collecting plate is welded and coupled to each of the non-coating portion of the positive electrode and the non-coating portion of the negative electrode, and then the current collecting plate is connected to an electrode terminal to manufacture a battery. The current collecting plate has a larger cross-sectional area than a strip-type electrode tab, and resistance is inversely proportional to the cross-sectional area of a path through which current flows. Thus, when a secondary battery is formed in the structure described above, cell resistance may be significantly reduced.

Meanwhile, the positive electrode non-coating portion and the negative electrode non-coating portion may be processed in a form of a plurality of segments that are independently bendable, and at least a portion of the plurality of segments may be bent toward the winding center C of the electrode assembly.

The segments may be formed by processing the current collectors of the positive electrode and the negative electrode through metal foil cutting processes such as laser notching, ultrasonic cutting, and punching.

When the non-coating portions of the positive electrode and the negative electrode are processed into a form of the plurality of segments, stress acting on the non-coating portion when bent may be reduced to prevent deformation or damage of/to the non-coating portion, thus improving welding characteristics with the current collecting plate.

The current collecting plate and the non-coating portion are generally bonded through welding, and in order to enhance welding characteristics, the non-coating portion needs to be bent evenly as much as possible by applying intense pressure to a welding region of the non-coating portion. However, during this bending process, the shape of the non-coating portion may be irregularly distorted and deformed, and the deformed region may come into contact with an electrode of the opposite polarity, causing an internal short-circuit or microcracks in the non-coating portion. However, when the non-coating portions of the positive electrode and the negative electrode are processed into a form of a plurality of segments independently bendable, stress acting on the non-coating portions during the bending may be relieved, thereby minimizing deformation and damage of/to the non-coating portions.

In addition, when the non-coating portion is processed in the form of segments as described above, the plurality of segments overlap with each other during the bending, thereby increasing welding strength with the current collecting plate, and preventing lasers from penetrating into the electrode assembly and melting and evaporating the separator or the active material when advanced technology such as laser welding is used. Preferably, at least a portion of the plurality of bent segments may be overlapped on an upper end and a lower end of the electrode assembly, and the current collecting plate may be coupled to the plurality of overlapped segments.

Meanwhile, the electrode assembly according to the present invention may have a structure in which an insulating layer 24 is further formed on a positive electrode 10 as illustrated in FIG. 3. Specifically, the insulating layer 24 may be formed to cover a portion of a positive electrode active material layer and a portion of a non-coating portion along a direction parallel to a winding direction of an electrode assembly.

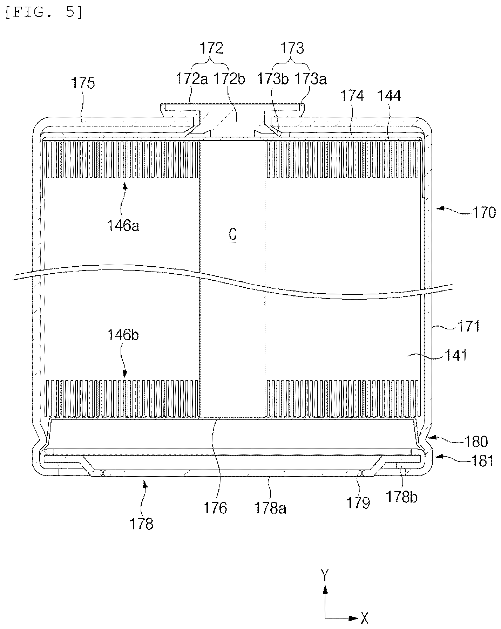

In the case of a battery having a tab-less structure in which a non-coating portion 22c of the positive electrode 10 and a non-coating portion 22a of the negative electrode 11 are used as electrode tabs, an electrode assembly is formed such that the positive electrode 10 may protrude upward from the separator 12 and the negative electrode 11 may protrude downward from the separator 12, and the protruding positive electrode 10 and/or negative electrode 11 are bent and then coupled to a current collecting plate. However, when the positive electrode 10 or the negative electrode 11 is bent as described above, a current collector of the positive electrode 10 or the negative electrode 11 crosses the separator and is positioned close to the electrode of the opposite polarity, and this may allow the positive electrode and the negative electrode to be in electrical contact, causing an internal short circuit. However, as illustrated in FIG. 5, when the insulating layer 24 covering a portion of the positive electrode active material layer and the non-coating portion is formed, the insulating layer 24 may prevent the positive electrode 10 and the negative electrode 11 from coming into electrical contact with each other, thereby preventing a short-circuit from occurring inside batteries.

Preferably, the insulating layer 24 may be provided on at least one surface of the current collector of the positive electrode 10, preferably, may be provided on each of both surfaces of the positive electrode 10.

In addition, the insulating layer 24 may be formed in a region of the positive electrode 10 that is likely to face an active material layer 21a of the negative electrode 11. For example, on a surface facing the negative electrode 11 after being bent in the non-coating portion 22c of the positive electrode 10, the insulating layer 24 may be formed to extend to a terminal end of the non-coating portion 22c. However, for the opposite surface to the surface facing the negative electrode 11 after being bent, it is desirable the insulating layer 24 is formed only in a portion of the non-coating portion 22c, for example, before arriving at a bending point of the non-coating portion 22c. This is because, when the insulating layer 24 is formed on the entire region of the non-coating portion on the opposite surface to the surface facing the negative electrode 11, electrical contact with the current collecting plate is not available and thus the non-coating portion is incapable of serving as an electrode tab.

Meanwhile, a material or component of the insulating layer 24 is not particularly limited as long as it is attachable to the positive electrode while ensuring insulating performance. For example, the insulating layer may be an insulating coating layer or an insulating tape, and the insulating coating layer may include an organic binder and inorganic particles. In this case, the organic binder may be, for example, styrene butadiene rubber (SBR), and the inorganic particles may be alumina oxide, but the embodiment of the present invention is not limited thereto.

### (2) Battery case

The battery case is for accommodating the electrode assembly and the electrolyte, and various battery cases known in the art, such as a cylindrical battery case, a square battery case, and a pouch type battery case may be used.

Preferably, the battery case may be a cylindrical battery case.

When the battery case is a cylindrical battery case, a ratio (R/H) of a diameter (R) to a height (H) (a ratio of form factor) may be 0.4 or more, preferably 0.4 to 0.8, and more preferably 0.5 to 0.7. When the above range is satisfied, in combination with a configuration that satisfies high-capacity characteristics and has a TS index defined by Formula 1 of 1.72 or less, the effect of improving thermal safety of a lithium secondary battery may be further maximized.

In addition, the lithium secondary battery according to the present invention may be, for example, a 46110 cell (diameter: 46 mm, height: 110 mm, and form factor ratio: 0.418), a 4875 cell (diameter: 48 mm, height: 75 mm, and form factor ratio: 0.640), a 48110 cell (diameter: 48 mm, height: 110 mm, and form factor ratio: 0.436), a 4880 cell (diameter: 48 mm, height: 80 mm, and form factor ratio: 0.600), a 4680 cell (diameter: 46 mm, height: 80 mm, and form factor ratio: 0.575) and a 4695 cell (diameter: 46 mm, height: 95 mm, and form factor ratio: 0.484). In numerical values indicating the form factor, the first two numbers indicate the diameter (R) of the lithium secondary battery, and the next two or three numbers indicate the height (H) of the lithium secondary battery. When the above range is satisfied, high capacity characteristics may be achieved.

### (3) Electrolyte

The electrolyte according to the present invention may include a lithium salt and an organic solvent.

Any compound may be used as the lithium salt without particular limitation as long as it is a compound capable of providing lithium ions used in lithium secondary batteries. Specifically, as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, $LiB(C_2O_4)_2$, or the like may be used. The lithium salt may be used in a concentration range of 0.1 M to 5.0 M, preferably 0.1 M to 3.0 M. When the concentration of the lithium salt is included within the above range, since the electrolyte may have appropriate conductivity and viscosity, excellent performance of the electrolyte may be obtained and lithium ions may effectively move.

The organic solvent may include at least one of a cyclic carbonate-based organic solvent, a linear carbonate-based organic solvent, a linear ester-based organic solvent, or a cyclic ester-based organic solvent.

The cyclic carbonate-based organic solvent, as a high-viscosity organic solvent, may typically include at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate.

In addition, the linear carbonate-based organic solvent, as an organic solvent having a low viscosity and a low dielectric constant, may be at least one organic solvent selected from the group consisting of dimethyl carbonate (DMC), diethyl carbonate (DEC), dipropyl carbonate, ethylmethyl carbonate (EMC), methylpropyl carbonate, and ethylpropyl carbonate, and specifically may include ethylmethyl carbonate (EMC).

The linear ester-based organic solvent may specifically be, for example, at least one organic solvent selected from the group consisting of methyl acetate, ethyl acetate, propyl acetate, methyl propionate, ethyl propionate, propyl propionate, and butyl propionate.

The cyclic ester-based organic solvent may be at least one organic solvent selected from the group consisting of γ-butyrolactone, γ-valerolactone, γ-caprolactone, ε-valerolactone, and ε-caprolactone.

Preferably, the electrolyte according to the present invention may include ethylene carbonate and dimethyl carbonate as organic solvents.

Meanwhile, in addition to the electrolyte constituents, the electrolyte may also further include other additives for improving lifetime characteristics of batteries, preventing reduction in battery capacity, and increasing battery discharge capacity.

Typical examples of the other additives may include at least one selected from the group consisting of a cyclic carbonate-based compound, a halogen-substituted carbonate-based compound, a sultone-based compound, a sulfate-based compound, a borate-based compounds, a nitrile-based compound, a benzene-based compound, an amine-based compound, a silane-based compound, and a lithium salt-based compound different from the lithium salt contained in the electrolyte.

Specifically, the other additives may be one or more compounds selected from the group consisting of vinylene carbonate (VC), vinylethylene carbonate, fluoroethylene carbonate (FEC), 1,3-propane sultone (PS), 1,4-butane sultone, ethene sultone, 1,3-propene sultone (PRS), 1,4-butene sultone, 1-methyl-1,3-propene sultone, ethylene sulfate (Esa), trimethylene sulfate (TMS), methyl trimethylene sulfate (MTMS), tetraphenylborate, lithium oxalyldifluoroborate, succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, 4-fluorophenylacetonitrile, fluorobenzene, triethanolamine, ethylenediamine, tetravinylsilane, $LiN(SO_2F)_2$ (lithium bis(fluorosulfonyl) imide, LiFSI), $LiN(SO_2CF_3)_2$ (lithium bis (trifluoromethane sulfonyl) imide, LiTFSI), $LiPO_2F_2$, LiODFB, $LiB(C_2O_4)_2$ (lithium bisoxalatoborate, LiBOB), and $LiBF_4$.

The other additives may be included in an amount of 0.01 wt% to 20 wt%, preferably 0.05 wt% to 5.0 wt%, with respect to the total weight of the electrolyte. When the other additives are present in an amount of less than 0.01 wt%, the effects of improving the low-temperature output, high-temperature storage characteristics, and high-temperature lifetime characteristics of batteries are insignificant, and when the other additives are present in an amount of greater than 20 wt%, there is a chance that side reactions in an electrolyte may occur excessively during charging and discharging of batteries. In particular, when the SEI layer-forming additives are added in excessive amounts, the additives may not be sufficiently decomposed at high temperatures, and thus may remain as unreacted substances or precipitated substances in an electrolyte at room temperature. Accordingly, side reactions that reduce the lifespan or resistance characteristics of a secondary battery may occur.

Next, the lithium secondary battery according to the present invention will be described.

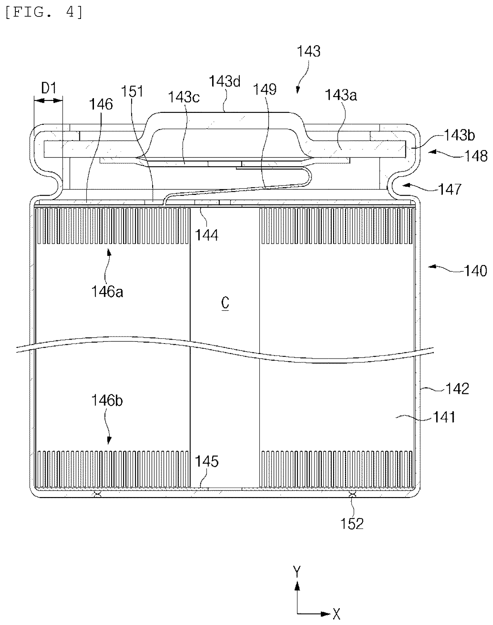

FIGS. 4 and 5 disclose embodiments of the lithium secondary battery according to the present invention. Hereinafter, referring to FIGS. 4 and 5, the lithium secondary battery according to the present invention will be described. However, FIGS. 4 and 5 only show one embodiment of the present invention, and a structure of the battery of the present invention is not limited to the range disclosed in FIGS. 4 and 5.

FIG. 4 illustrates a cross-sectional view of a lithium secondary battery having a tab-less structure according to an embodiment of the present invention.

Referring to FIG. 4, a lithium secondary battery 140 according to the present invention may include an electrode assembly 141, a battery case 142 in which the electrode assembly 141 and an electrolyte (not shown) are accommodated, and a sealing body 143 which seals an open end of the battery case 142.

In this case, the electrode assembly may be a stack of a positive electrode, a separator, and a negative electrode wound in one direction. In addition, each of the positive electrode and the negative electrode of the electrode assembly may include a non-coating portion in which an active material layer is not formed, and may be stacked and wound such that the positive electrode non-coating portion and the negative electrode non-coating portion are positioned in an upper end and a lower end of the electrode assembly, respectively. The electrode assembly is described above, and thus hereinafter, other components except for the electrode assembly will be described only.

Meanwhile, the battery case 142 is a can-shaped container with an open end formed at the top, and is made of a conductive metal material such as aluminum or steel. The battery case accommodates the electrode assembly 141 in an inner space through the upper open end, and also accommodates an electrolyte (not shown).

Meanwhile, it is preferable that the lithium secondary battery 140 of the present invention does not include a current interruption device (CID).

Meanwhile, as illustrated in FIG. 4, the battery case 142 is electrically connected to a non-coating portion 146b of the negative electrode, and contacts an external power source and serves as a negative electrode terminal that delivers current, which is applied from the external power source to the negative electrode.

If needed, a beading portion 147 and a crimping portion 148 may be provided in the upper end of the battery case 142. The beading portion 147 may be formed by pressing the perimeter of outer circumferential surface of the battery case 142 to a distance D1. The beading portion 147 prevents the electrode assembly 141, which is accommodated inside the battery case 142, from escaping through the upper opening of the battery case 142, and may serve as a support on which the sealing body 143 is seated.

The crimping portion 148 may be formed above the beading portion 147 and has a shape that extends and bends to surround a portion of the outer circumferential surface of a cap plate 143a disposed above the beading portion 147 and a portion of the top surface of the cap plate 143a.

Next, the sealing body 143 seals an open end of the battery case 142, and includes a cap plate 143a and a first gasket 143b that provides air-tightness to a space between the cap plate 143a and the battery case 142 and has insulating properties, and as necessary, may further include a connection plate 143c electrically and mechanically coupled to the cap plate 143a. The cap plate 143a may be pressed against the beading portion 147 formed in the battery case 142 and fixed by the crimping portion 148.

The cap plate 143a is a component made of a metal material having electrical conductivity and covers the upper opening of the battery case 142. The cap plate 143a is electrically connected to the positive electrode of the electrode assembly 141 and electrically insulated from the battery case 142 through the first gasket 143b. Thus, the cap plate 143a may serve as the positive electrode terminal of a lithium secondary battery. The cap plate 143a may include a protrusion portion 143d that protrudes upward from a central portion C thereof. The protrusion portion 143d contacts the external power source and allows the current to be applied from the external power source.

The first gasket 143b may be interposed between the cap plate 143a and the crimping portion 148 to ensure the air-tightness of the battery case 142 and electrical insulation between the battery case 142 and the cap plate 143a.

Meanwhile, the lithium secondary battery 140 according to the present invention may further include current collecting plates 144 and 145 as necessary. The current collecting plates are coupled to a positive electrode non-coating portion 146a and a negative electrode non-coating portion 146b, and connected to electrode terminals (i.e., a positive electrode terminal and a negative electrode terminal).

Specifically, the cylindrical battery 140 according to the present invention may include a first current collecting plate 144 coupled to an upper portion of the electrode assembly 141 and a second current collecting plate 145 coupled to a lower portion of the electrode assembly 141.

The first current collecting plate 144 and/or the second current collecting plate 145 may be further included.

The first current collecting plate 144 is coupled to the upper portion of the electrode assembly 141. The first current collecting plate 144 may be made of a conductive metal material such as aluminum, copper, or nickel, and electrically connected to the non-coating portion 146a of the positive electrode. A lead 149 may be connected to the first current collecting plate 144. The lead 149 extends upward from the electrode assembly 141, and may be coupled to the connection plate 143c or directly coupled to a lower surface of the cap plate 143a. The coupling between the lead 149 and other components may be made through welding. Preferably, the first current collecting plate 144 may be formed integrally with the lead 149. In this case, the lead 149 may have a plate shape that extends outward from the central portion C of the first current collecting plate 144.

Meanwhile, the first current collecting plate 144 is coupled to an end of the non-coating portion 146a of the positive electrode. This coupling may be made through laser welding, resistance welding, ultrasonic welding, soldering, or the like.

The second current collecting plate 145 is coupled to the lower portion of the electrode assembly 141. The second current collecting plate 145 may be made of a conductive metal material such as aluminum, copper, or nickel, and electrically connected to the non-coating portion 146b of the negative electrode. One surface of the second current collecting plate 145 may be coupled to the non-coating portion 146b of the negative electrode, and the other surface may be coupled to an inner bottom surface of the battery case 142. In this case, this coupling may be made through laser welding, resistance welding, ultrasonic welding, soldering, or the like.

Meanwhile, the lithium secondary battery 140 according to the present invention may further include an insulator 146 as necessary. The insulator 146 may be disposed to cover an upper surface of the first current collecting plate 144. The insulator 146 covers the first current collecting plate 144 and thus may prevent the first current collecting plate 144 and an inner circumferential surface of the battery case 142 from coming into direct contact.

The insulator 146 includes a lead hole 151 through which the lead 149 extending upward from the first current collecting plate 144 may be drawn out. The lead 149 is drawn out upward through the lead hole 151 and coupled to the lower surface of the connection plate 143c or the lower surface of the cap plate 143a.

The insulator 146 may be made of polymer resin having insulating properties, for example, a polymer resin material such as polyethylene, polypropylene, polyimide, or polybutylene terephthalate.

Meanwhile, the lithium secondary battery 140 according to the present invention may further include a venting portion 152 formed in the lower surface of the battery case 142 as necessary. The venting portion 152 corresponds to a region of the lower surface of the battery case 142, which has a smaller thickness compared to peripheral regions. The venting portion 152 has a small thickness and is thus structurally weak compared to the peripheral regions. Thus, when the pressure within the lithium secondary battery 140 rises to a certain level or higher, the venting portion 152 is ruptured, and the gas within the battery case 152 is discharged to the outside, thereby preventing the battery from exploding.

FIG. 5 illustrates a cross-sectional view of a lithium secondary battery having a tab-less structure according to another embodiment of the present invention.

Referring to FIG. 5, a lithium secondary battery 170 according to another embodiment of the present invention is different from the lithium secondary battery 140 illustrated in FIG. 3 in terms of structures of a battery case and a sealing body, but the configurations of an electrode assembly and an electrolyte are substantially the same as each other.

Specifically, the lithium secondary battery 170 includes a battery case 171 through which a rivet terminal 172 passes and installed. The rivet terminal 172 is installed on a partially closed surface (an upper surface in the drawing) of the battery case 171, which is partially closed at one terminal end thereof. The rivet terminal 172 is riveted in a through-hole (a first opening of a first terminal end) of the battery case 171 in a state in which a second gasket 173 having insulating properties is interposed. The rivet terminal 172 is exposed outward in a direction opposite to the direction of gravity.

The rivet terminal 172 includes a terminal exposure portion 172a and a terminal insertion portion 172b. The terminal exposure portion 172a is exposed outward from the partially closed surface of the battery case 171. The terminal exposure portion 172a may be positioned at an approximately central portion C of the partially closed surface of the battery case 171. The maximum diameter of the terminal exposure portion 172a may be formed to be larger than the maximum diameter of the through-hole formed in the battery case 171. The terminal insertion portion 172b passes through the approximately central portion of the partially closed surface of the battery case 171 and may be electrically connected to the non-coating portion 146a of the positive electrode. The terminal insertion portion 172b may be rivet-coupled to the inner surface of the battery case 171. That is, an end of the terminal insertion portion 172b may have a shape curved toward the inner surface of the battery case 171. The maximum diameter of an end of the terminal insertion portion 172b may be greater than the maximum diameter of the through-hole of the battery case 171.

The lower end surface of the terminal insertion portion 172b may be welded to the first current collecting plate 144 connected to the non-coating portion 146a of the positive electrode. An insulating cap 174 made of an insulating material may be interposed between the first current collecting plate 144 and the inner surface of the battery case 171. The insulating cap 174 covers the upper portion of the first current collecting plate 144 and the upper end edge portion of the electrode assembly 141. Accordingly, it is possible to prevent a short-circuit from occurring as a non-coating portion B3 on the outer circumference of the electrode assembly 141 comes into contact with the inner surface of the battery case 171 having different polarity. The terminal insertion portion 172b of the rivet terminal 172 passes through the insulating cap 174 and may be welded to the first current collecting plate 144.

The second gasket 173 is interposed between the battery case 171 and the rivet terminal 172 and prevents electrical contact between the battery case 171 and the rivet terminal 172 which have polarities different from each other. Accordingly, the upper surface of the battery case 171 having an approximately flat shape may serve as a positive electrode terminal of the lithium secondary battery 170.

The second gasket 173 includes a gasket exposure portion 173a and a gasket insertion portion 173b. The gasket exposure portion 173a is interposed between the terminal exposure portion 172a of the rivet terminal 172 and the battery case 171. The gasket insertion portion 173b is interposed between the terminal insertion portion 172b of the rivet terminal 172 and the battery case 171. Upon riveting the terminal insertion portion 172b, the gasket insertion portion 173b may be deformed together and come into close contact with the inner surface of the battery case 171. The second gasket 173 may be made of, for example, polymer resin having insulating properties.

The gasket exposure portion 173a of the second gasket 173 may have a shape that extends to cover the outer circumferential surface of the terminal exposure portion 172a of the rivet terminal 172. When the second gasket 173 covers the outer circumferential surface of the rivet terminal 172, it is possible to prevent a short-circuit from occurring during a process of coupling an electrical connection component such as a bus bar to the upper surface of the battery case 171 and/or the rivet terminal 172. Although not illustrated, the gasket exposure portion 173a may have a shape that extends to cover a portion of the upper surface of the terminal exposure portion 172a as well as the outer circumferential surface thereof.

When the second gasket 173 is made of polymer resin, the second gasket 173 may be coupled to the battery case 171 and the rivet terminal 172 by thermal fusion. In this case, the air-tightness may be reinforced on the coupling interface between the second gasket 173 and the rivet terminal 172 and the coupling interface between the second gasket 173 and the battery case 171. Meanwhile, when the gasket exposure portion 173a of the second gasket 173 has a shape that extends to the upper surface of the terminal exposure portion 172a, the rivet terminal 172 may be integrally coupled to the second gasket 173 through insert injection molding.

Except for the regions occupied by the rivet terminal 172 and the second gasket 173 on the upper surface of the battery case 171, the remaining regions 175 correspond to a negative electrode terminal having a polarity opposite to that of the rivet terminal 172.

A second current collecting plate 176 is coupled to the lower portion of the electrode assembly 141. The second current collecting plate 176 may be made of a conductive metal material such as aluminum, steel, copper, or nickel, and electrically connected to the non-coating portion 146b of the negative electrode.

Preferably, the second current collecting plate 176 is electrically connected to the battery case 171. To this end, at least a portion of the edge portion of the second current collecting plate 176 may be interposed and fixed between the inner surface of the battery case 171 and a first gasket 178b. In an example, at least a portion of the edge portion of the second current collecting plate 176 may be fixed, through welding, to a beading portion 180 formed at the lower end of the battery case 171 while being supported by the lower end surface of the beading portion 180. In a modified example, at least a portion of the edge portion of the second current collecting plate 176 may be directly welded to an inner wall surface of the battery case 171.

The second current collecting plate 176 may include a plurality of protrusions and recesses (not shown) formed radially on a surface facing the non-coating portion 146b. When the protrusions and recesses are formed, the protrusions and recesses may be press-fit into the non-coating portion 146b by pressing the second current collecting plate 176.

Preferably, the second current collecting plate 176 and an end of the non-coating portion 146b may be coupled through welding, for example, laser welding.

A sealing body 178 for sealing the lower open end of the battery case 171 includes a cap plate 178a and a first gasket 178b. The first gasket 178b electrically separates the cap plate 178a from the battery case 171. A crimping portion 181 fixes an edge of the cap plate 178a and the first gasket 178b together. A vent portion 179 is provided in the cap plate 178a. The vent portion 179 has substantially the same configuration as an embodiment described above.

Preferably, the cap plate 178a may be made of a conductive metal material. However, since the first gasket 178b is interposed between the cap plate 178a and the battery case 171, the cap plate 178a has no electrical polarity. The sealing body 178 serves to seal a lower open end of the battery case 171 and discharge gas when the internal pressure of the battery cell 170 rises to a threshold value or higher.

Preferably, the rivet terminal 172 electrically connected to the non-coating portion 146a of the positive electrode is used as a positive electrode terminal. Also, a portion 175 except for the rivet terminal 172 on the upper surface of the battery case 171 electrically connected to the non-coating portion 146b of the negative electrode through the second current collecting plate 176 is used as a negative electrode terminal. As described above, when two electrode terminals are positioned on the upper portion of a lithium secondary battery, it is possible to dispose an electrical connection component such as a bus bar only on one side of the lithium secondary battery 170. This may bring simplification of a battery pack structure and enhancement of energy density. Also, the portion 175 used as the negative electrode terminal has an approximately flat shape, and thus, a sufficient bonding area may be secured when the electrical connection component such as a bus bar is bonded. Accordingly, in the lithium secondary battery 170, resistance at a bonding site for the electrical connection component may be reduced to a preferable level.

When the lithium secondary battery is formed in the tab-less structure described above, the current concentration becomes less compared to a typical battery having an electrode tab, and thus, the heat generation inside the battery may be effectively reduced. Accordingly, improvement in the thermal stability of the battery may be obtained. In addition, when the lithium secondary battery according to the present invention has the tab-less structure as described above, the effect of improving thermal safety may be maximized in combination with a configuration having a TS index of 1.72 or less as defined by Formula 1 above.

### Battery pack

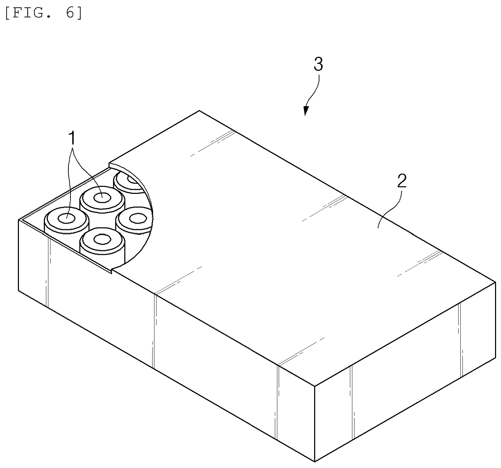

The lithium secondary battery according to the present invention as described above may be included as a unit cell to manufacture a battery pack. FIG. 6 schematically illustrates a configuration of a battery pack according to an embodiment of the present invention. Referring to FIG. 6, a battery pack 3 according to an embodiment of the present invention includes an assembly in which a lithium secondary battery 1 is electrically connected, and a pack housing 2 accommodating the same. The lithium secondary battery 1 is the lithium secondary battery according to an embodiment described above. In the drawing, components such as a bus bar for electrically connecting the secondary batteries 1, a cooling unit, and an external terminal are omitted for convenience of illustration.

The battery pack 3 may be mounted to an automobile. The automobile may be, for example, an electric vehicle, a hybrid vehicle, or a plug-in hybrid vehicle. The automobile includes a four-wheel vehicle or a two-wheel vehicle.

Hereinafter, the present invention will be described in more detail through specific embodiments.

**Example 1**

<Preparation of positive electrode>

A positive electrode active material, a conductive material, and a binder were added to N-methylpyrrolidone in a weight ratio of 97:1:2 to prepare a positive electrode slurry. In this case, $Li_2[Ni_{0.93}Co_{0.05}Mn_{0.02}]O_2$, a single particle type particle, was used as the positive electrode active material, CNT was used as the conductive material, and PVDF was used as the binder.

The positive electrode slurry was applied onto an aluminum current collector, dried, and then roll pressed to prepare a positive electrode.

<Preparation of negative electrode>

A negative electrode active material, a conductive material, a binder, and a thickener were added to distilled water in a weight ratio of 98:0.1:1:0.9 to prepare a negative electrode slurry. In this case, natural graphite and artificial graphite were mixed in a weight ratio of 6:4 as the negative electrode active material, SW-CNT was used as the conductive material, styrene-butadiene rubber (SBR) was used as the binder, and carboxymethyl cellulose (CMC) was used as the thickener.

The negative electrode slurry was applied onto a copper current collector having a thickness of 10 $\mu$m, dried, and then roll pressed to prepare a negative electrode including a negative electrode active material layer. In this case, the negative electrode active material had a BET specific surface area of 1.7 $m^2$/g.

<Manufacture of lithium secondary battery>

As described above, a separator was placed between the positive electrode and the negative electrode, and the separator/positive electrode/separator/negative electrode were stacked in that order, and then wound to prepare a jelly-roll type electrode assembly.

The electrode assembly was inserted into a cylindrical battery case having a height of 80 mm and a diameter of 46 mm, and an electrolyte was injected to manufacture a lithium secondary battery (4680 cell). In this case, the electrolyte was prepared by adding $LiPF_6$ at a molar concentration of 1.25 M to an organic solvent in which ethylene carbonate (EC), ethylmethyl carbonate (EMC), and DMC (dimethyl carbonate) were mixed at a weight ratio of 20:20:60.

In this case, a weight ratio of the electrolyte with respect to a total weight of the lithium secondary battery was 0.098.

**Example 2**

<Preparation of positive electrode>

A positive electrode was prepared in the same manner as in Example 1, except that $Li_2[Ni_{0.93}Co_{0.05}Mn_{0.02}]O_2$, a single particle type particle, and $Li_2[Ni_{0.97}Co_{0.005}Mn_{0.025}]O_2$, a secondary particle, were mixed in a weight ratio of 5:5 as the positive electrode active material.

<Preparation of negative electrode>

In this case, a negative electrode was prepared in the same manner as in Example 1, except that natural graphite and artificial graphite were mixed in a weight ratio of 5:5 as the negative electrode active material, and the negative electrode active material had a BET specific surface area of 1.5 $m^2$/g.

<Manufacture of lithium secondary battery>

In this case, a lithium secondary battery was manufactured in the same manner as in Example 1, except that the electrolyte was injected such that the weight ratio of the electrolyte to the total weight of the lithium secondary battery was 0.105.

### Example 3

<Preparation of positive electrode>

A positive electrode was prepared in the same manner as in Example 1, except that $Li_2[Ni_{0.93}Co_{0.05}Mn_{0.02}]O_2$-, a single particle type particle, and $Li_2[Ni_{0.97}Co_{0.005}Mn_{0.025}]O_2$-, a secondary particle, were mixed in a weight ratio of 5:5 as the positive electrode active material.

<Preparation of negative electrode>

In this case, a negative electrode was prepared in the same manner as in Example 1, except that natural graphite and artificial graphite were mixed in a weight ratio of 5:5 as the negative electrode active material, and the negative electrode active material had a BET specific surface area of 1.5 $m^2/g$.

<Manufacture of lithium secondary battery>

In this case, a lithium secondary battery was manufactured in the same manner as in Example 1, except that the electrolyte was injected such that the weight ratio of the electrolyte to the total weight of the lithium secondary battery was 0.098.

### Example 4

<Preparation of positive electrode>

A positive electrode was prepared in the same manner as in Example 1, except that $Li_2[Ni_{0.93}Co_{0.05}Mn_{0.02}]O_2$-, a single particle type particle, and $Li_2[Ni_{0.97}Co_{0.005}Mn_{0.025}]O_2$-, a secondary particle, were mixed in a weight ratio of 8:2 as the positive electrode active material.

<Preparation of negative electrode>

In this case, a negative electrode was prepared in the same manner as in Example 1, except that natural graphite and artificial graphite were mixed in a weight ratio of 5:5 as the negative electrode active material, and the negative electrode active material had a BET specific surface area of 1.5 $m^2/g$.

<Manufacture of lithium secondary battery>

In this case, a lithium secondary battery was manufactured in the same manner as in Example 1, except that the electrolyte was injected such that the weight ratio of the electrolyte to the total weight of the lithium secondary battery was 0.105.

### Example 5

<Preparation of positive electrode>

A positive electrode was prepared in the same manner as in Example 1, except that $Li_2[Ni_{0.93}Co_{0.05}Mn_{0.02}]O_2$, a single particle type particle, and $Li_2[Ni_{0.97}Co_{0.005}Mn_{0.025}]O_2$, a secondary particle, were mixed in a weight ratio of 4:6 as the positive electrode active material.

<Preparation of negative electrode>

In this case, a negative electrode was prepared in the same manner as in Example 1, except that natural graphite and artificial graphite were mixed in a weight ratio of 1:9 as the negative electrode active material, and the negative electrode active material had a BET specific surface area of 0.9 $m^2/g$.

<Manufacture of lithium secondary battery>

In this case, a lithium secondary battery was manufactured in the same manner as in Example 1, except that the electrolyte was injected such that the weight ratio of the electrolyte to the total weight of the lithium secondary battery was 0.098.

**Comparative Example 1**

<Preparation of positive electrode>

A positive electrode was prepared in the same manner as in Example 1, except that $Li_2[Ni_{0.93}Co_{0.05}Mn_{0.02}]O_2$-, a single particle type particle, and $Li_2[Ni_{0.97}Co_{0.005}Mn_{0.025}]O_2$-, a secondary particle, were mixed in a weight ratio of 2:8 as the positive electrode active material.

<Preparation of negative electrode>

In this case, a negative electrode was prepared in the same manner as in Example 1, except that natural graphite and artificial graphite were mixed in a weight ratio of 3:7 as the negative electrode active material, and the negative electrode active material had a BET specific surface area of 1.2 $m^2$/g.

<Manufacture of lithium secondary battery>

In this case, a lithium secondary battery was manufactured in the same manner as in Example 1, except that the electrolyte was injected such that the weight ratio of the electrolyte to the total weight of the lithium secondary battery was 0.105.

**Comparative Example 2**

<Preparation of positive electrode>

A positive electrode was prepared in the same manner as in Example 1, except that $Li_2[Ni_{0.97}Co_{0.005}Mn_{0.025}]O_2$-, a secondary particle, was used as the positive electrode active material.

<Preparation of negative electrode>

In this case, a negative electrode was prepared in the same manner as in Example 1, except that natural graphite and artificial graphite were mixed in a weight ratio of 6:4 as the negative electrode active material, and the negative electrode active material had a BET specific surface area of 1.7 $m^2$/g.

<Manufacture of lithium secondary battery>

In this case, a lithium secondary battery was manufactured in the same manner as in Example 1, except that the electrolyte was injected such that the weight ratio of the electrolyte to the total weight of the lithium secondary battery was 0.105.

**Comparative Example 3**

<Preparation of positive electrode>

A positive electrode was prepared in the same manner as in Example 1, except that $Li_2[Ni_{0.93}Co_{0.05}Mn_{0.02}]O_2$-, a single particle type particle, and $Li_2[Ni_{0.97}Co_{0.005}Mn_{0.025}]O_2$-, a secondary particle, were mixed in a weight ratio of 2:8 as the positive electrode active material.

<Preparation of negative electrode>

In this case, a negative electrode was prepared in the same manner as in Example 1, except that natural graphite and artificial graphite were mixed in a weight ratio of 5:5 as the negative electrode active material, and the negative electrode active material had a BET specific surface area of 1.5 $m^2$/g.

<Manufacture of lithium secondary battery>

In this case, a lithium secondary battery was manufactured in the same manner as in Example 1, except that the electrolyte was injected such that the weight ratio of the electrolyte to the total weight of the lithium secondary battery was 0.105.

**Comparative Example 4**

<Preparation of positive electrode>

A positive electrode was prepared in the same manner as in Example 1, except that $Li_2[Ni_{0.97}Co_{0.005}Mn_{0.025}]O_2$, a secondary particle, was used as the positive electrode active material.

<Preparation of negative electrode>

In this case, a negative electrode was prepared in the same manner as in Example 1, except that natural graphite and artificial graphite were mixed in a weight ratio of 5:5 as the negative electrode active material, and the negative electrode active material had a BET specific surface area of 1.5 $m^2$/g.

<Manufacture of lithium secondary battery>

In this case, a lithium secondary battery was manufactured in the same manner as in Example 1, except that the electrolyte was injected such that the weight ratio of the electrolyte to the total weight of the lithium secondary battery was 0.105.

**Comparative Example 5**

<Preparation of positive electrode>

A positive electrode was prepared in the same manner as in Example 1, except that $Li_2[Ni_{0.93}Co_{0.05}Mn_{0.02}]O_2$, a single particle type particle, and $Li_2[Ni_{0.97}Co_{0.005}Mn_{0.025}]O_2$, a secondary particle, were mixed in a weight ratio of 5:5 as the positive electrode active material.

<Preparation of negative electrode>

In this case, a negative electrode was prepared in the same manner as in Example 1, except that natural graphite and artificial graphite were mixed in a weight ratio of 5:5 as the negative electrode active material, and the negative electrode active material had a BET specific surface area of 1.5 $m^2$/g.

<Manufacture of lithium secondary battery>

In this case, a lithium secondary battery was manufactured in the same manner as in Example 1, except that the electrolyte was injected such that the weight ratio of the electrolyte to the total weight of the lithium secondary battery was 0.098.

**Comparative Example 6**

<Preparation of positive electrode>

A positive electrode was prepared in the same manner as in Example 1, except that $Li_2[Ni_{0.93}Co_{0.05}Mn_{0.02}]O_2$, a single particle type particle, and $Li_2[Ni_{0.97}Co_{0.005}Mn_{0.025}]O_2$, a secondary particle, were mixed in a weight ratio of 5:5 as the positive electrode active material.

<Preparation of negative electrode>

In this case, a negative electrode was prepared in the same manner as in Example 1, except that natural graphite and artificial graphite were mixed in a weight ratio of 7:3 as the negative electrode active material, and the negative electrode active material had a BET specific surface area of 1.5 $m^2$/g.

<Manufacture of lithium secondary battery>

In this case, a lithium secondary battery was manufactured in the same manner as in Example 1, except that the electrolyte was injected such that the weight ratio of the electrolyte to the total weight of the lithium secondary battery was 0.105.

**Comparative Example 7**

<Preparation of positive electrode>

A positive electrode was prepared in the same manner as in Example 1, except that $Li_2[Ni_{0.93}Co_{0.05}Mn_{0.02}]O_2$, a single particle type particle, and $Li_2[Ni_{0.97}Co_{0.005}Mn_{0.025}]O_2$, a secondary particle, were mixed in a weight ratio of 6:4 as the positive electrode active material.

<Preparation of negative electrode>

In this case, a negative electrode was prepared in the same manner as in Example 1, except that natural graphite and artificial graphite were mixed in a weight ratio of 9:1 as the negative electrode active material, and the negative electrode active material had a BET specific surface area of 2.1 $m^2/g$.

<Manufacture of lithium secondary battery>

In this case, a lithium secondary battery was manufactured in the same manner as in Example 1, except that the electrolyte was injected such that the weight ratio of the electrolyte to the total weight of the lithium secondary battery was 0.092.

**Experimental Example 1: Measurement of TS index**

For the lithium secondary batteries manufactured in Examples 1 to 5 and Comparative Examples 1 to 7, the TS index defined by Equation 1 below was calculated and shown in Table 1 below.

[Equation 1]

$$TS = \frac{P_S \times N_G}{S_N \times E}$$

In Equation 1 above, $P_S$ indicates a ratio of a weight of the lithium nickel-based oxide in the form of secondary particles to a total weight of the lithium nickel-based oxide, $N_G$ indicates a ratio of a weight of the natural graphite to a total weight of the natural graphite and artificial graphite, $S_N$ indicates a BET specific surface area (unit: $m^2/g$) of the negative electrode active material, and E indicates a ratio of a total weight of the electrolyte to a total weight of the lithium secondary battery.

1) Measurement of $P_S$

Cross-sections of positive electrodes perpendicular to positive electrode surfaces of the lithium secondary batteries manufactured in Examples 1 to 5 and Comparative Examples 1 to 7 were observed using a scanning electron microscope (SEM) to distinguish between secondary particles and single particle type particles from the particle shape of the secondary particles and single particle type particles, and then a volume ratio of the secondary particles and single particle type particles was measured therefrom, and a weight ratio of lithium nickel-based oxide in the form of secondary particles to a total weight of the secondary particles and the single particle type particles was calculated by multiplying the respective densities of the secondary particles and the single particle type particles to measure $P_S$. The results thereof are presented in Table 1 below.

2) Measurement of $N_G$

Cross-sections of negative electrodes perpendicular to negative electrode surfaces of the lithium secondary batteries manufactured in Examples 1 to 5 and Comparative Examples 1 to 7 were observed using a scanning electron microscope (SEM) to distinguish between artificial graphite and natural graphite from the particle shape of the artificial graphite and natural graphite, and then a volume ratio of the artificial graphite and natural graphite was measured therefrom, and a ratio of a weight of the natural graphite to a total weight of the natural graphite and the artificial graphite was calculated by multiplying the respective densities of the artificial graphite and the natural graphite to measure $N_G$. The results thereof are presented in Table 1 below.

3) Measurement of $S_N$

Negative electrodes of the lithium secondary batteries manufactured in Examples 1 to 5 and Comparative Examples 1 to 7 were scraped into a powder form, and then a nitrogen gas adsorption amount of the powder at liquid nitrogen temperature (77 K) was measured using BELSORP-mino II of BEL Japan to obtain $S_N$, a BET specific surface area (unit: $m^2/g$) of the negative electrode active material included in the lithium secondary batteries manufactured in each of Examples 1 to 5 and Comparative Examples 1 to 7. The results thereof are presented in Table 1 below.

4) Measurement of E

The lithium secondary batteries manufactured in Examples 1 to 5 and Comparative Examples 1 to 7 were each stored at 25 °C for 24 hours, then charged up to 4.2 V at 25 °C and then discharged up to 2.5 V three times during a charge-discharge cycle, thereby activating each lithium secondary battery.

Thereafter, a total weight of each lithium secondary battery subjected to activation was measured, and each lithium secondary battery was disassembled to measure a weight of an electrolyte in the lithium secondary batteries manufactured in Examples 1 to 5 and Comparative Examples 1 to 7. Specifically, the weight of the electrolyte was measured by (1) measuring a weight ($M_L$) of the activated lithium secondary battery before disassembling the activated lithium secondary battery, (2) disassembling the lithium secondary battery to remove an electrolyte present in a battery case, (3) immersing the battery case and the electrode assembly in a dimethyl carbonate solvent to remove the electrolyte present on a surface of the battery case, a surface of the electrode assembly, and internal pores, and then drying the battery case and the electrode assembly, and (4) measuring a weight ($M_C$) of the dried battery case and a weight ($M_A$) of the dried electrode assembly, and then substituting the measured $M_L$, $M_C$, and $M_A$ into Equation A below.

```
[Equation A]

Weight of electrolyte above = M_L-M_C-M_A
```

[Table 1]

|  | Ps | $N_G$ | $S_N$ [$m^2/g$] | E | TS index [$g/m^2$] |
|---|---|---|---|---|---|
| Example 1 | 0 | 0.6 | 1.7 | 0.098 | 0.00 |
| Example 2 | 0.5 | 0.5 | 1.5 | 0.105 | 1.59 |
| Example 3 | 0.5 | 0.5 | 1.5 | 0.098 | 1.70 |
| Example 4 | 0.2 | 0.5 | 1.5 | 0.105 | 0.63 |
| Example 5 | 0.6 | 0.1 | 0.9 | 0.098 | 0.68 |
| Comparative Example 1 | 0.8 | 0.3 | 1.2 | 0.105 | 1. 94 |
| Comparative Example 2 | 1 | 0.6 | 1.7 | 0.105 | 3.44 |
| Comparative Example 3 | 0.8 | 0.5 | 1.5 | 0.105 | 2.54 |
| Comparative Example 4 | 1 | 0.5 | 1.5 | 0.105 | 3.18 |
| Comparative Example 5 | 0.5 | 0.5 | 1.5 | 0.092 | 1. 81 |
| Comparative Example 6 | 0.5 | 0.7 | 1.5 | 0.105 | 2.22 |
| Comparative Example 7 | 0.4 | 0.9 | 2.1 | 0.092 | 1.86 |

**Experimental Example 2: Hot box test**

After activating the lithium secondary batteries manufactured in Examples 1 to 5 and Comparative Examples 1 to 7, the activated lithium secondary batteries of Examples 1 to 5 and Comparative Examples 1 to 7 were charged up to 4.2 V and 0.05 C in the conditions of CC/CV and 1/3 C at 25 °C for full charge up to an SOC of 100%. Each fully charged lithium secondary battery was placed in a hot box chamber at room temperature, heated to 130 °C for 30 minutes at a heating rate of 5 °C/min, and kept for 1 hour to measure changes in temperature of the battery. When no thermal runaway or ignition occurred during the test, it was marked as Pass, and when thermal runaway and/or ignition occurred, it was marked as Fail. The results are presented in Table 2 below.

[Table 2]

|  | Hot box test results |
| --- | --- |
| Example 1 | Pass |
| Example 2 | Pass |
| Example 3 | Pass |
| Example 4 | Pass |
| Example 5 | Pass |
| Comparative Example 1 | Fail |
| Comparative Example 2 | Fail |
| Comparative Example 3 | Fail |
| Comparative Example 4 | Fail |
| Comparative Example 5 | Fail |
| Comparative Example 6 | Fail |
| Comparative Example 7 | Fail |

Referring to Table 2 above, it is determined that the lithium secondary batteries manufactured in Examples 1 to 5 showed no thermal runaway and/or ignition from the hot box test, but the lithium secondary batteries manufactured in Comparative Examples 1 to 7 showed thermal runaway and/or ignition from the hot box test. Accordingly, it is seen that the lithium secondary batteries manufactured in Examples 1 to 5 has excellent thermal safety.

(Description of Symbols)

1: Lithium secondary battery
2: Pack housing
3: Battery pack
10: Positive electrode
11: Negative electrode
12: Separator
20: Current collector
21: Active material layer
21a: Negative electrode active material layer
22: Non-coating portion
22a: Non-coating portion of negative electrode
22c: Non-coating portion of positive electrode
24: Insulating layer
C: Winding center
140: Lithium secondary battery
141: Electrode assembly
142: Battery case
143: Sealing body

143a: Cap plate
143b: First gasket
143c: Connection plate
143d: Protrusion portion
144: First current collecting plate
145: Second current collecting plate
146: Insulator
146a: Positive electrode non-coating portion
146b: Negative electrode non-coating portion
147: Beading portion
148: Crimping portion
149: Lead
151: Lead hole
152: Venting portion
170: Lithium secondary battery
171: Battery case
172: Rivet terminal
172a: Terminal exposure portion
172b: Terminal insertion portion
173: Second gasket
173a: Gasket exposure portion
173b: Gasket insertion portion
174: Insulating cap
176: Second current collecting plate
178: Sealing body
178a: Cap plate
178b: First gasket
179: Vent portion
180: Beading portion
181: Crimping portion

**Claims**

1. A lithium secondary battery comprising:

   an electrode assembly comprising a positive electrode, a negative electrode, and a separator placed between the positive electrode and the negative electrode;
   an electrolyte; and
   a battery case accommodating the electrode assembly and the electrolyte,
   wherein the positive electrode comprises a lithium nickel-based oxide containing 80 mol% or more of nickel among all metals excluding lithium as a positive electrode active material,
   the lithium nickel-based oxide comprises single particle type particles, secondary particles, or a combination thereof,
   the negative electrode comprises at least one selected from the group consisting of natural graphite and artificial graphite, as a negative electrode active material, and
   a TS index (unit: $g/m^2$) defined by Equation 1 below is 1.72 or less,

   [Equation 1]

$$TS = \frac{P_S \times N_G}{S_N \times E}$$

   wherein in Equation 1 above,
   $P_S$ indicates a ratio of a weight of lithium nickel-based oxide in the form of secondary particles to a total weight of the lithium nickel-based oxide,

$N_G$ indicates a ratio of a weight of the natural graphite to a total weight of the natural graphite and the artificial graphite,

$S_N$ indicates a BET specific surface area (unit: $m^2/g$) of the negative electrode active material, and

E indicates a ratio of a total weight of the electrolyte to a total weight of the lithium secondary battery.

2. The lithium secondary battery of claim 1, wherein the $P_S$ is 0.7 or less.

3. The lithium secondary battery of claim 1, wherein the $N_G$ is 0.6 or less.

4. The lithium secondary battery of claim 1, wherein the $S_N$ ranges from 1.3 $m^2/g$ to 1.9 $m^2/g$.

5. The lithium secondary battery of claim 1, wherein the E ranges from 0.08 to 0.13.

6. The lithium secondary battery of claim 1, wherein the lithium nickel-based oxide is represented by Formula 1 below:

$$[\text{Formula 1}] \qquad Li_{a1}[Ni_{x1}Co_{y1}Mn_{z1}M^1_{w1}]O_2$$

wherein in Formula 1 above,

$M^1$ is at least one doping element selected from the group consisting of W, Cu, Fe, V, Cr, Ti, Zr, Zn, Al, In, Ta, Y, In, La, Sr, Ga, Sc, Gd, Sm, Ca, Ce, Nb, Mg, B, and Mo, and $0.8 \leq a1 \leq 1.2$, $0.8 \leq x1 < 1$, $0 < y1 \leq 0.2$, $0 < z1 \leq 0.2$, and $0 \leq w1 \leq 0.1$.

7. The lithium secondary battery of claim 1, wherein the battery case is a cylindrical battery case.

8. The lithium secondary battery of claim 1, wherein the lithium secondary battery has a ratio (R/H) of diameter (R) to height (H) of 0.4 or more.

9. The lithium secondary battery of claim 1, wherein the lithium secondary battery is a 46110 cell, a 48110 cell, a 4880 cell, or a 4680 cell.

10. The lithium secondary battery of claim 1, wherein the lithium secondary battery comprises a non-coating portion in which an active material layer is not formed on at least a portion of the positive electrode and the negative electrode, wherein the positive electrode non-coating portion and the negative electrode non-coating portion are defined as electrode tabs.

11. The lithium secondary battery of claim 10, wherein the positive electrode non-coating portion and the negative electrode non-coating portion are formed at an end of one side of each of the positive electrode and the negative electrode along a direction in which the electrode assembly is wound, a current collecting plate is coupled to each of the positive electrode non-coating portion and the negative electrode non-coating portion, and the current collecting plate is connected to an electrode terminal.

12. The lithium secondary battery of claim 10, wherein the positive electrode non-coating portion and the negative electrode non-coating portion are processed in a form of a plurality of segments that are independently bendable, and at least a portion of the plurality of segments are bent toward a winding center of the electrode assembly.

13. The lithium secondary battery of claim 12, wherein at least a portion of the plurality of bent segments are overlapped on an upper end and a lower end of the electrode assembly, and the current collecting plate is coupled to the plurality of overlapped segments.

14. A battery pack comprising the lithium secondary battery of any one of claims 1 to 13 as a unit cell.

[FIG. 1]

direction of winding

11    10    12

Z
X

[FIG. 2]

20  22                    21

Z
Y

[FIG. 3]

22c

24

10

11

21c

21a

12

22a

Z

X

[FIG. 4]

[FIG. 5]

[FIG. 6]

## INTERNATIONAL SEARCH REPORT

| International application No. |
| --- |
| **PCT/KR2024/020756** |

| A. | CLASSIFICATION OF SUBJECT MATTER |
| --- | --- |

**H01M 4/525**(2010.01)i; **H01M 4/505**(2010.01)i; **H01M 4/583**(2010.01)i; **H01M 10/052**(2010.01)i; **H01M 50/107**(2021.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/525(2010.01); H01M 10/052(2010.01); H01M 10/0567(2010.01); H01M 4/02(2006.01); H01M 4/505(2010.01); H01M 50/107(2021.01); H01M 50/533(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지 (lithium secondary battery), 단입자 (single particle), 이차 입자 (secondary particle), 고니켈 (high nickel), 원통형 배터리 (cylindrical battery)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2023-0015309 A (CONTEMPORARY AMPEREX TECHNOLOGY CO., LIMITED) 31 January 2023 (2023-01-31)<br>See abstract; paragraphs [0063], [0064], [0077], [0078], [0088], [0090], [0115] and [0116]; and claims 16 and 17. | 1-14 |
| Y | WO 2021-125535 A1 (LG ENERGY SOLUTION, LTD.) 24 June 2021 (2021-06-24)<br>See abstract; and paragraphs [0027]-[0032], [0158] and [0159]. | 1-14 |
| Y | KR 10-2023-0053534 A (LG ENERGY SOLUTION, LTD.) 21 April 2023 (2023-04-21)<br>See abstract; paragraphs [0023] and [0024]; and figures 3-5. | 10-13 |
| A | KR 10-2023-0087425 A (SK ON CO., LTD.) 16 June 2023 (2023-06-16)<br>See abstract; and claims 1-14. | 1-14 |
| A | WO 2022-168117 A1 (INDIAN SPACE RESEARCH ORGANISATION) 11 August 2022 (2022-08-11)<br>See abstract; claims 1-41; and figures 1 and 2. | 1-14 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 March 2025** | **28 March 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/020756**

| Patent document cited in search report | | | Publication date (day/month/year) | Patent family member(s) | | | Publication date (day/month/year) |
|---|---|---|---|---|---|---|---|
| KR | 10-2023-0015309 | A | 31 January 2023 | CN | 116420259 | A | 11 July 2023 |
| | | | | CN | 116420259 | B | 06 September 2024 |
| | | | | EP | 4148854 | A1 | 15 March 2023 |
| | | | | EP | 4148854 | A4 | 04 October 2023 |
| | | | | JP | 2023-537444 | A | 01 September 2023 |
| | | | | JP | 7469496 | B2 | 16 April 2024 |
| | | | | US | 2023-0043895 | A1 | 09 February 2023 |
| | | | | WO | 2023-000214 | A1 | 26 January 2023 |
| WO | 2021-125535 | A1 | 24 June 2021 | CN | 114747041 | A | 12 July 2022 |
| | | | | CN | 114747041 | B | 18 October 2024 |
| | | | | CN | 119208527 | A | 27 December 2024 |
| | | | | DE | 202020006054 | U1 | 09 July 2024 |
| | | | | EP | 4047679 | A1 | 24 August 2022 |
| | | | | JP | 2023-503075 | A | 26 January 2023 |
| | | | | JP | 2024-040214 | A | 25 March 2024 |
| | | | | JP | 7427783 | B2 | 05 February 2024 |
| | | | | KR | 10-2021-0079178 | A | 29 June 2021 |
| | | | | KR | 10-2024-0150408 | A | 15 October 2024 |
| | | | | KR | 10-2722643 | B1 | 28 October 2024 |
| | | | | US | 2023-0155123 | A1 | 18 May 2023 |
| | | | | US | 2024-0266525 | A1 | 08 August 2024 |
| KR | 10-2023-0053534 | A | 21 April 2023 | CN | 118104037 | A | 28 May 2024 |
| | | | | EP | 4418398 | A1 | 21 August 2024 |
| | | | | JP | 2024-537303 | A | 10 October 2024 |
| | | | | WO | 2023-063779 | A1 | 20 April 2023 |
| KR | 10-2023-0087425 | A | 16 June 2023 | CN | 110620216 | A | 27 December 2019 |
| | | | | KR | 10-2019-0143088 | A | 30 December 2019 |
| | | | | KR | 10-2023-0009522 | A | 17 January 2023 |
| | | | | KR | 10-2485994 | B1 | 05 January 2023 |
| | | | | KR | 10-2543109 | B1 | 13 June 2023 |
| | | | | KR | 10-2583699 | B1 | 26 September 2023 |
| | | | | US | 11271194 | B2 | 08 March 2022 |
| | | | | US | 2019-0393479 | A1 | 26 December 2019 |
| | | | | US | 2022-0149352 | A1 | 12 May 2022 |
| WO | 2022-168117 | A1 | 11 August 2022 | CN | 116897452 | A | 17 October 2023 |
| | | | | EP | 4289015 | A1 | 13 December 2023 |
| | | | | JP | 2024-505576 | A | 06 February 2024 |
| | | | | KR | 10-2023-0141847 | A | 10 October 2023 |
| | | | | US | 2024-0113321 | A1 | 04 April 2024 |

Form PCT/ISA/210 (patent family annex) (July 2022)

**EP 4 715 907 A1**

## REFERENCES CITED IN THE DESCRIPTION

**Patent documents cited in the description**

- KR 1020230188774